# EUROPÄISCHE PATENTSCHRIFT

(11) **EP 3 914 487 B1**
(45) Veröffentlichungstag und Bekanntmachung des Hinweises auf die Patenterteilung: **08.03.2023**
(21) Anmeldenummer: 20702080.1
(22) Anmeldetag: 17.01.2020
(51) Int. Cl.: B60T 8/44, B60T 13/66, B60T 13/74

(54) **VERFAHREN UND VORRICHTUNG ZUM BETREIBEN EINES BREMSSYSTEMS, BREMSSYSTEM UND FAHRZEUG**
METHOD AND DEVICE FOR OPERATING A BRAKE SYSTEM, BRAKE SYSTEM AND VEHICLE
PROCÉDÉ ET DISPOSITIF PERMETTANT DE FAIRE FONCTIONNER UN SYSTÈME DE FREINAGE, SYSTÈME DE FREINAGE ET VÉHICULE

(30) Priorität: 24.01.2019 DE 102019200876
(43) Veröffentlichungstag der Anmeldung: 01.12.2021
(73) Patentinhaber: Robert Bosch GmbH, 70442 Stuttgart (DE)
(72) Erfinder: HAAG, Florian, 74248 Ellhofen (DE); MARQUART, Martin, 78564 Reichenbach (DE)
(86) Internationale Anmeldenummer: PCT/EP2020/051119
(87) Internationale Veröffentlichungsnummer: WO 2020/152048

(56) Entgegenhaltungen:
- EP-A1- 3 045 369
- WO-A1-2015/188958
- DE-A1-102016 007 187
- DE-A1-102016 208 217
- DE-A1-102017 209 892
- US-A1- 2016 209 841

## Beschreibung

Die Erfindung betrifft ein Verfahren zum Betreiben eines Bremssystems eines Fahrzeugs, insbesondere Kraftfahrzeugs, wobei das Bremssystem zumindest einen elektrischen Aktuator, insbesondere Bremskraftverstärker, aufweist, der dazu ansteuerbar ist, eine Bremskraft zu erzeugen, wobei der Aktuator durch ein autonomes Fahrsystem und in Abhängigkeit von einer Bremspedalbetätigung eines Bremspedal des Fahrzeugs ansteuerbar ist, und wobei ein Notbremsvorgang eingeleitet wird, wenn der Aktuator sowohl durch das autonome Fahrsystem als auch durch eine Bremspedalbetätigung angesteuert wird.

Weiterhin betrifft die Erfindung eine Vorrichtung zum Betreiben eines solchen Bremssystems, ein Bremssystem sowie ein Fahrzeug mit einem solchen Bremssystem.

### Stand der Technik

Die Offenlegung DE 10 2016 208 217 A1 offenbart ein Verfahren zum Betrieb eines Kraftfahrzeugs, das imstande ist, wahlweise unter der Steuerung eines an Bord des Kraftfahrzeugs befindlichen menschlichen Fahrers oder zumindest streckenweise autonom zu fahren, und das imstande ist, Kollisionen zu vermeiden, Beeinträchtigungen des Fahrers zu erkennen sowie Notbremsungen einzulegen, welche sowohl in einem nicht autonomen Fahrbetrieb als auch in einem autonomen Fahrbetrieb, in dem keine Beeinträchtigung des Fahrers erkannt wird, nach einer voreingestellten ersten Kennlinie durchgeführt werden.

Verfahren der eingangs genannten Art sind aus dem Stand der Technik bereits bekannt. Sicherheitsbremssysteme ermöglichen autonom eingeleitete Notbremsvorgänge, die beispielsweise dann greifen, wenn eine Gefahr von einer Umfeldsensorik erkannt wurde, von einem Fahrer des Fahrzeugs jedoch nicht oder noch nicht. So ist es beispielsweise bekannt, mithilfe einer Sensorik den Abstand des Fahrzeugs zu einem vorausfahrenden Fahrzeug oder anderen Gegenständen zu überwachen, um bei Erkennen eines drohenden Aufpralls eine Notbremsung einzuleiten. Für die Notbremsung wird in möglichst kurzer Zeit ein möglichst hoher Bremsdruck aufgebaut. Bei modernen Kraftfahrzeugen, die einen elektromechanischen Bremskraftverstärker aufweisen, wird der Bremsdruck durch eine elektrische Ansteuerung des Bremskraftverstärkers aufgebaut. Dies kann dabei außerdem dazu führen, dass ein Bremspedal ohne Zutun des Fahrers verlagert wird. Bei einer autonom durchgeführten Bremsung mithilfe des Bremskraftverstärkers wird das Bremspedal ab einem gewissen Differenzweg zwischen Bremspedal und einem Aktuatorelement des Bremskraftverstärkers, der durch einen mechanischen Anschlag verursacht wird, durch den Bremskraftverstärker beziehungsweise das Aktuatorelement, beispielsweise Kolben, mitgezogen. Dazu weist der Bremskraftverstärker das beweglich gelagertes Aktuatorelement auf, das die Bremskraft oder den Bremsdruck durch seine Verlagerung erhöht und mechanisch mit dem Bremspedal durch den mechanischen Anschlag gekoppelt beziehungsweise koppelbar ist. Um zu vermeiden, dass ein Notbremsvorgang unnötigerweise eingeleitet wird, ist es bekannt, diesen nur dann einzuleiten, wenn der Fahrer auch das Bremspedal betätigt. Die Betätigung des Bremspedals wird also zur Plausibilisierung der Notwendigkeit einer Notbremsung herangezogen. Dies macht es notwendig, die Bremspedalbetätigung durch den Fahrer auch während eines Notbremsvorgangs beziehungsweise während einer durch das autonome Fahrsystem erfolgten Ansteuerung des Aktuators zu erkennen. Hierzu wird die Differenz zwischen dem Bremspedalweg und dem Weg des Aktuatorelements als Differenzweg erfasst. Betätigt der Fahrer das Bremspedal, wird der durch den mechanischen Anschlag begrenzte Bremsweg verändert. Diese erkannte Veränderung dient zur Erkennung der Bremspedalbetätigung und damit zur Auslösung oder Freigabe des Notbremsvorgangs.

### Offenbarung der Erfindung

Das erfindungsgemäße Verfahren mit den Merkmalen des Anspruchs 1 hat den Vorteil, dass eine verbesserte Erkennung der Bremspedalbetätigung gewährleistet wird, die robuster gegenüber mechanischen Toleranzen des Bremssystems ist und dadurch auch auf einem sehr kleinen Differenzwegbereich eine Betätigung des Bremspedals durch den Fahrer sicher erkennt. Erfindungsgemäß ist hierzu vorgesehen, dass die Ansteuerung durch das autonome Fahrsystem mit einem variierenden Validierungssignal überlagert wird, dass der Differenzweg zwischen einem Aktuatorelement des Aktuators und dem Bremspedal überwacht wird, und dass die Ansteuerung des Aktuators durch eine Bremspedalbetätigung während der Ansteuerung durch das autonome Fahrsystem erkannt wird, wenn der Differenzweg variiert. Solange der Benutzer das Bremspedal nicht betätigt, wird der Aktuator somit allein durch das Fahrsystem angesteuert. Aufgrund des mechanisch begrenzten maximalen Differenzwegs bleibt dieser auf einem konstanten Wert, wenn der Benutzer das Bremspedal nicht betätigt. Das Validierungssignal, das die Ansteuerung des Aktuators überlagert, führt zu einem vorgegebenen konstanten Wert, durch welchen der Differenzweg nicht beeinträchtigt werden kann, wenn der mechanische Anschlag bereits erreicht ist. Sobald jedoch der Fahrer das Bremspedal betätigt, und dadurch den Differenzweg verändert, insbesondere verkleinert, wird aufgrund des variierenden Validierungssignals nunmehr der Differenzweg durch das Variieren des Validierungssignals entsprechend beeinflusst. Somit ist das Vorhandensein des Validierungssignals in dem Differenzweg erkennbar. Damit ist ein sicheres Erkennen der Bremspedalbetätigung gewährleistet. Sobald bei Ansteuerung durch das Fahrsystem der Differenzweg ungleichmäßig ist, bedeutet dies, dass der Fahrer das Bremspedal ebenfalls betätigt hat und der mechanische Anschlag des Systems verlassen wurde. Damit ist die Notbremsansteuerung des autonomen Fahrsystems sicher plausibilisiert.

Gemäß einer bevorzugten Weiterbildung der Erfindung wird das Validierungssignal derart vorgegeben, dass es sich von einem zeitlichen Verlauf einer Bremspedalbetätigung unterscheidet. Insbesondere wird das Validierungssignal derart vorgegeben, dass es durch eine Bremspedalbetätigung nicht reproduziert werden kann. Dadurch ist eine eindeutige Unterscheidung des sich auf den Differenzweg auswirkenden Validierungssignals von einer Bremspedalbetätigung gewährleistet.

Weiterhin ist bevorzugt vorgesehen, dass das Validierungssignal als Rechtecksignal, Sägezahnsignal, Dreiecksignal oder als Sinusförmiges-Signal vorgegeben wird. Dadurch ist eine sichere Unterscheidung von einem Ansteuersignal, das von einem Benutzer durch Betätigung des Bremspedals angestellt werden könnte, gegeben.

Weiterhin ist bevorzugt vorgesehen, dass während einer Ansteuerung durch das autonome Fahrsystem die Ansteuerung durch eine Bremspedalbetätigung erkannt wird, wenn der Verlauf des Differenzwegs mit dem Verlauf des Validierungssignals korrespondiert. Wenn die Variierung des Differenzwegs über die Zeit gesehen der Variierung des Validierungssignals entspricht oder nahezu entspricht, wird das Validierungssignal in dem Differenzweg erkannt und damit auf die Betätigung des Bremspedals geschlossen.

Vorzugsweise werden als Validierungssignal ein Soll-Volumenstrom, eine Soll-Geschwindigkeit, ein Soll-Motormoment und/oder ein Soll-Strom vorgegeben. Das Validierungssignal und dessen Validierung können somit auf unterschiedliche Arten und Weisen in das Gesamtsystem eingebracht werden.

Die erfindungsgemäße Vorrichtung mit den Merkmalen des Anspruchs 6 zeichnet sich durch ein Steuergerät aus, das speziell dazu hergerichtet ist, bei bestimmungsgemäßem Gebrauch das erfindungsgemäße Verfahren durchzuführen beziehungsweise auszuführen. Es ergeben sich hierdurch die bereits genannten Vorteile.

Das erfindungsgemäße Bremssystem mit den Merkmalen des Anspruchs 7 zeichnet sich durch die erfindungsgemäße Vorrichtung aus.

Das erfindungsgemäße Fahrzeug, insbesondere Kraftfahrzeug, mit den Merkmalen des Anspruchs 8 zeichnet sich durch das erfindungsgemäße Bremssystem aus.

Es ergeben sich dadurch jeweils die bereits genannten Vorteile. Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: ein Kraftfahrzeug in einer vereinfachten Draufsicht und
- Figuren 2A und 2B: Diagramme zur Erläuterung eines vorteilhaften Verfahrens zum Betreiben eines Bremssystems des Kraftfahrzeugs.

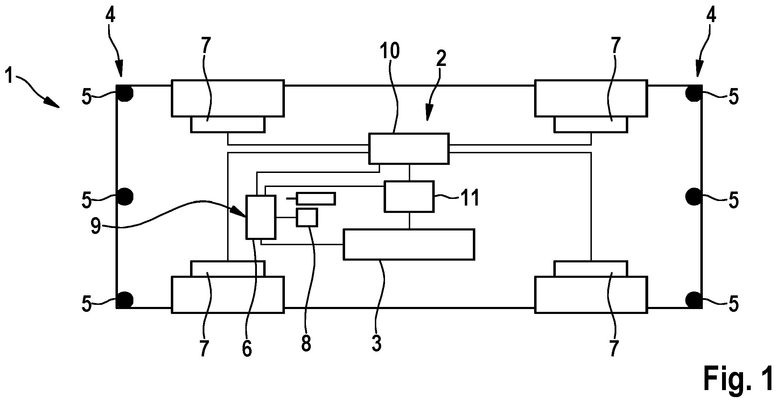

Figur 1 zeigt in einer vereinfachten Draufsicht ein Kraftfahrzeug 1, das ein Bremssystem 2 sowie ein autonomes Fahrsystem 3 aufweist. Das autonome Fahrsystem 3 ist dazu ausgebildet, das Kraftfahrzeug 1 in Abhängigkeit von einem gewählten Fahrziel vollautonom zu dem Fahrziel zu führen. Dabei ist das Fahrsystem 3 optional mit einer Umfeldsensorik 4 verbunden, die mehrere Umfeldsensoren 5 aufweist, beispielsweise Radar-, Ultraschall- oder Lasersensoren, welche das Umfeld des Kraftfahrzeugs 1 auf Gefahrenpotential überwachen. Erfasst beispielsweise das Fahrsystem 3 mithilfe der Umfeldsensorik 4, dass sich das Kraftfahrzeug 1 auf einen Gegenstand oder auf ein vorausfahrendes Fahrzeug mit einer Geschwindigkeit bewegt, die dazu führen könnte, dass das Kraftfahrzeug 1 auf den Gegenstand aufprallt, so ist das Fahrsystem 3 dazu ausgebildet, das Bremssystem 2 dazu anzusteuern, eine Notbremsung zum Verzögern des Kraftfahrzeugs 1 einzuleiten, durch welche der Aufprall vermieden werden soll.

Vorliegend weist das Bremssystem 2 einen elektromechanischen Bremskraftverstärker 6 auf, der elektrisch dazu ansteuerbar ist, einen Hydraulikdruck in dem Bremssystem 2 zu erhöhen, um an Radbremsen 7 einen erhöhten Bremsdruck beziehungsweise eine erhöhte Bremskraft zur Verfügung zu stellen. Dabei wird der Bremskraftverstärker 6 in Abhängigkeit von einer Betätigung eines Bremspedals 8 durch einen Fahrer des Kraftfahrzeugs 1 angesteuert. Der Bremskraftverstärker 6 stellt somit einen Aktuator 9 zum Erhöhen der Bremskraft dar.

Der Bremskraftverstärker 6 ist außerdem mit dem Fahrsystem 3 signaltechnisch verbunden, sodass auch das Fahrsystem 3 den Bremskraftverstärker 6 dazu ansteuern kann, um insbesondere einen autonomen Bremsvorgang, wie vorstehend bereits erläutert, einleiten oder durchführen zu können. Der von dem Bremskraftverstärker 6 erzeugte Hydraulikdruck wird dann einem oder mehreren Bremskreisen, in Figur 1 durch einen Kasten 10 vereinfacht dargestellt, zur Verfügung gestellt. Ein Steuergerät 11 des Kraftfahrzeugs 1 überwacht dabei den Bremskraftverstärker 6 sowie das Fahrsystem 3 und das Bremspedal 8 in der im Folgenden beschriebenen Art und Weise, um die Anforderung einer Notbremsung durch das Fahrsystem 3 zu plausibilisieren. Fordert das Fahrsystem 3 eine Notbremsung an, indem es den Aktuator 6 zum Erhöhen der Bremskraft ansteuert, so gewährleistet das Steuergerät 11, dass das Ansteuersignal des Fahrsystems 3 durch ein Validierungssignal, das einen sich verändernden Verlauf aufweist, überlagert wird.

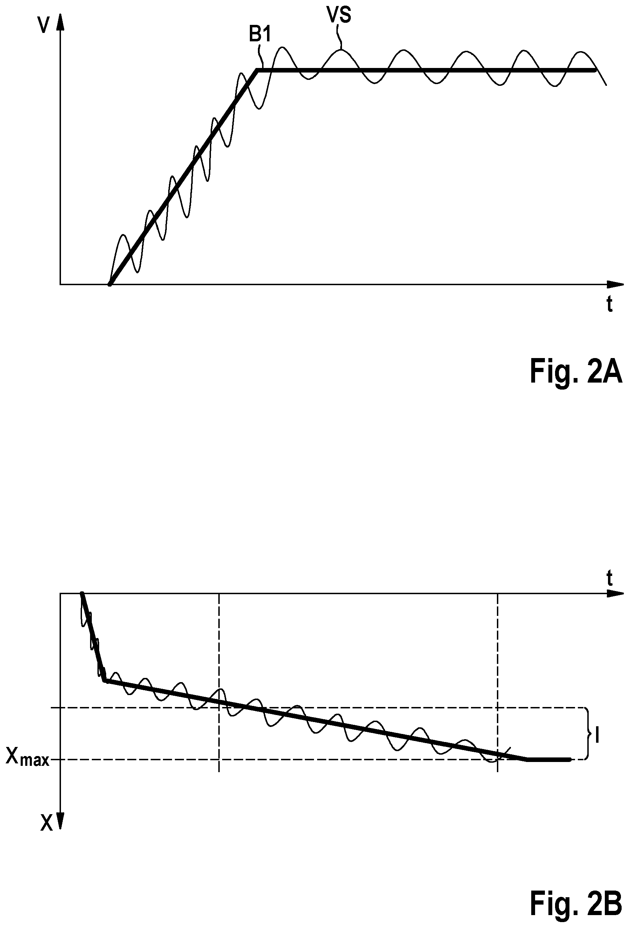

Figur 2A zeigt hierzu in einem vereinfachten Diagramm den Verlauf des Validierungssignals VS über das Bremsanforderungssignal B1 des Fahrsystems 3. Das Validierungssignal VS ist als Signal mit sinusförmigem Verlauf vorgegeben. Alternativ kommt aber auch ein Rechteckverlauf, ein Sägezahnverlauf oder ein dreiecksförmiger Verlauf des Validierungssignals in Frage. Das Validierungssignal VS ist derart beschaffen, dass es hinsichtlich seiner Dynamik nicht von einem menschlichen Fahrer durch Betätigung des Bremspedals verursacht werden kann. Durch die Variierung überlagert das Validierungssignal das eigentliche Anforderungssignal und führt zu einem vorgegebenen Bremswert. Dabei wird die Bremsanforderung durch eine Volumenstromanforderung des Fahrsystems an den elektromechanischen Bremskraftverstärker 6 umgesetzt. Das Validierungssignal VS betrifft somit die Volumenstromanforderung V.

Das Bremspedal 8 ist mit dem Aktuator 9 derart gekoppelt, dass bei Anforderung eines erhöhten Bremsmoments ein Aktuatorelement des Aktuators 9 durch einen mechanischen Anschlag das Bremspedal 8 ab Vorliegen eines vorbestimmten Differenzweg X mitnimmt. Hierbei wird von einem negativen Differenzweg zwischen dem Aktuatorelement und dem Bremspedal gesprochen. Liegt ein positiver Differenzweg X vor, also oberhalb von 0, so fordert der Fahrer durch Betätigen des Bremspedals einen höheren Druck an, als das autonome Fahrsystem 3, was dazu führt, dass die erhöhte Druckanforderung des Fahrers umgesetzt wird. Zeigt der Differenzweg X einen Wert zwischen dem Minimalwert und 0 an, so wird darauf geschlossen, dass der Fahrer das Pedal zwar betätigt hat, das autonome Fahrsystem 3 jedoch die Stärke der Bremsung vorgibt. Figur 2B zeigt den Differenzweg X über die Zeit t entsprechend der Volumenstromanforderung gemäß Figur 2A.

Für den Fall, dass eine Pedalbetätigung durch den Fahrer vorliegt, kann der charakteristische Verlauf des Validierungssignals im Differenzweg (-signal) erkannt werden. Solange der mechanische Anschlag (xₘₐₓ) noch nicht erreicht ist, ist die Variierung des Validierungssignals in der Anforderung und damit in dem Differenzweg X erkennbar. Auf diese Weise kann der Fahrer auch bei geringen Pedalkräften auf dem Bremspedal erkannt werden. Erst dann, wenn zusätzlich zu der Anforderung durch das Fahrsystem 3 eine Betätigung des Bremspedals 8 durch das Erfassen des charakteristischen Verlaufs des Validierungssignals in dem Differenzweg X erkannt wird, wird die Notbremsanforderung des Fahrsystems 3 plausibilisiert und durchgeführt. Wird das charakteristische Signal addiert, so ist der Differenzweg X nur konstant gleich einem vorgegebenen Wert, wenn der mechanische Anschlag bereits erreicht ist. In diesem Fall betätigt der Fahrer das Pedal nicht. In allen anderen Fällen kann durch die Auswertung des nicht-konstanten Differenzwegs X, also des ungleichmäßigen Differenzwegs X, zweifelsfrei auf eine Betätigung des Bremspedals durch den Fahrer geschlossen werden. Insbesondere zeigt sich dann der sinusförmige Verlauf des Validierungssignals in dem Differenzweg, wie in Figur 2B durch eine sinusförmige Überlagerungslinie gezeigt. Es kann also direkt aus dem nicht-konstanten Differenzweg (-signal) auf die Betätigung des Fahrers geschlossen werden. Vorzugsweise wird ein Rauschen des Signals berücksichtigt und gefiltert, um eine Fehlinterpretation zu vermeiden. Weil das Verfahren unabhängig von mechanischen Toleranzen ist, erhöht sich dadurch der Einsatzbereich der Bremspedalbetätigungserkennung, wie in Figur 2B durch einen Bereich I angedeutet.

## Patentansprüche

1. Verfahren zum Betreiben eines Bremssystems (2) eines Fahrzeugs, insbesondere Kraftfahrzeugs (1), wobei das Bremssystem (2) zumindest einen elektrischen Aktuator (9), insbesondere Bremskraftverstärker (6), aufweist, der dazu ansteuerbar ist, eine Bremskraft zu erzeugen, wobei der Aktuator (9) durch ein autonomes Fahrsystem (3) und in Abhängigkeit von einer Bremspedalbetätigung eines Bremspedals (8) des Fahrzeugs ansteuerbar ist, und wobei ein Notbremsvorgang eingeleitet wird, wenn der Aktuator (9) sowohl durch das autonome Fahrsystem (3) als auch durch eine Bremspedalbetätigung angesteuert wird, **dadurch gekennzeichnet, dass** die Ansteuerung durch das autonome Fahrsystem (3) mit einem variierenden Validierungssignal (VS) überlagert wird, dass ein Differenzweg zwischen einem Aktuatorelement des Aktuators (9) und dem Bremspedal (8) überwacht wird, und dass die Ansteuerung des Aktuators (9) durch eine Bremspedalbetätigung während der Ansteuerung durch das autonome Fahrsystem (3) erkannt wird, wenn der Differenzweg variiert.

2. Verfahren nach Anspruch 1, **dadurch gekennzeichnet, dass** das Validierungssignal (VS) derart vorgegeben wird, dass es sich von einem zeitlichen Verlauf einer Bremspedalbetätigung unterscheidet.

3. Verfahren nach einem der vorhergehenden Ansprüche, **dadurch gekennzeichnet, dass** das Validierungssignal (VS) als Rechtecksignal, Sägezahnsignal, Dreiecksignal oder als Sinusförmiges-Signal vorgegeben wird.

4. Verfahren nach einem der vorhergehenden Ansprüche, **dadurch gekennzeichnet, dass** während einer Ansteuerung durch das autonome Fahrsystem (3) die Ansteuerung durch eine Bremspedalbetätigung erkannt wird, wenn der Verlauf des Differenzwegs mit dem Verlauf des Validierungssignals (VS) korrespondiert.

5. Verfahren nach einem der vorhergehenden Ansprüche, **dadurch gekennzeichnet, dass** als Validierungssignal (VS) ein Soll-Volumenstrom, eine Soll-Geschwindigkeit, ein Soll-Motormoment oder ein Soll-Strom vorgegeben werden.

6. Vorrichtung zum Betreiben eines Bremssystems (2) eines Fahrzeugs, insbesondere Kraftfahrzeugs (1), das zumindest einen elektrischen Aktuator (9) zum Erzeugen einer Bremskraft aufweist, insbesondere Bremskraftverstärker (6), sowie ein autonomes Fahrsystem, das dazu ausgebildet ist, selbsttätig den Aktuator (9) anzusteuern, und wenigstens ein durch einen Fahrer des Fahrzeugs betätigbares Bremspedal (8), **gekennzeichnet durch** ein Steuergerät (11), das speziell dazu hergerichtet ist, bei bestimmungsgemäßem Gebrauch das Verfahren nach einem der Ansprüche 1 bis 5 auszuführen.

7. Bremssystem (2) für ein Fahrzeug, insbesondere Kraftfahrzeug (1), mit einem elektrischen Aktuator (9), insbesondere Bremskraftverstärker (6), der dazu ansteuerbar ist, eine Bremskraft zu erzeugen, mit einem autonomen Fahrsystem, das dazu ausgebildet ist, den Aktuator (9) anzusteuern, und mit einem Bremspedal (8), **gekennzeichnet durch** eine Vorrichtung nach Anspruch 6.

8. Fahrzeug mit einem Bremssystem (2) nach Anspruch 7.

## Claims

1. Method for operating a brake system (2) of a vehicle, in particular motor vehicle (1), wherein the brake system (2) has at least one electrical actuator (9), in particular brake booster (6), which can be actuated to generate a braking force, wherein the actuator (9) can be actuated by an autonomous driving system (3) and depending on an operation of a brake pedal (8) of the vehicle, and wherein an emergency braking process is initiated if the actuator (9) is actuated both by the autonomous driving system (3) and by a brake pedal operation, **characterized in that** a varying validation signal (VS) is superimposed on the actuation by the autonomous driving system (3), **in that** a difference in travel between an actuator element of the actuator (9) and the brake pedal (8) is monitored, and **in that** the actuation of the actuator (9) by a brake pedal operation during the actuation by the autonomous driving system (3) is identified if the difference in travel varies.

2. Method according to Claim 1, **characterized in that** the validation signal (VS) is specified in such a way that it differs from a time profile of a brake pedal operation.

3. Method according to either of the preceding claims, **characterized in that** the validation signal (VS) is specified as a square-wave signal, a sawtooth signal, a triangular signal or as a sinusoidal signal.

4. Method according to one of the preceding claims, **characterized in that** the actuation by a brake pedal operation is identified during an actuation by the autonomous driving system (3) if the profile of the difference in travel corresponds to the profile of the validation signal (VS).

5. Method according to one of the preceding claims, **characterized in that** a target volume current, a target speed, a target motor torque or a target current are specified as the validation signal (VS).

6. Apparatus for operating a brake system (2) of a vehicle, in particular motor vehicle (1), which brake system has at least one electrical actuator (9) for generating a braking force, in particular brake booster (6), and an autonomous driving system which is designed to automatically actuate the actuator (9), and at least one brake pedal (8) which can be operated by a driver of the vehicle, **characterized by** a controller (11) which is specially set up to execute the method according to one of Claims 1 to 5 when used as intended.

7. Brake system (2) for a vehicle, in particular motor vehicle (1), comprising an electrical actuator (9), in particular brake booster (6), which can be actuated to generate a braking force, comprising an autonomous driving system which is designed to actuate the actuator (9), and comprising a brake pedal (8), **characterized by** an apparatus according to Claim 6.

8. Vehicle comprising a brake system (2) according to Claim 7.

## Revendications

1. Procédé permettant de faire fonctionner un système de freinage (2) d'un véhicule, en particulier d'un véhicule automobile (1), dans lequel le système de freinage (2) présente au moins un actionneur électrique (9), en particulier un servofrein (6), qui peut être piloté pour générer une force de freinage, dans lequel l'actionneur (9) peut être piloté par un système de conduite autonome (3) et en fonction d'un actionnement de pédale de frein d'une pédale de frein (8) du véhicule, et dans lequel un processus de freinage d'urgence est déclenché si l'actionneur (9) est piloté à la fois par le système de conduite autonome (3) et par un actionnement de pédale de frein,
**caractérisé en ce que** le pilotage par le système de conduite autonome (3) est superposé à un signal de validation variable (VS), **en ce qu'**une course différentielle entre l'élément d'actionneur de l'actionneur (9) et la pédale de frein (8) est surveillée, et **en ce que** le pilotage de l'actionneur (9) est identifié par un actionnement de pédale de frein pendant le pilotage par le système de conduite autonome (3) si la course différentielle varie.

2. Procédé selon la revendication 1, **caractérisé en ce que** le signal de validation (VS) est spécifié de façon à être différent d'une courbe de temps d'un actionnement de pédale de frein.

3. Procédé selon l'une quelconque des revendications précédentes, **caractérisé en ce que** le signal de validation (VS) est spécifié sous forme de signal rectangulaire, de signal en dents de scie, de signal triangulaire ou de signal sinusoïdal.

4. Procédé selon l'une quelconque des revendications précédentes, **caractérisé en ce que** pendant un pilotage par le système de conduite autonome (3), le pilotage par un actionnement de pédale de frein est identifié si la courbe de la course différentielle correspond à la courbe du signal de validation (VS).

5. Procédé selon l'une quelconque des revendications précédentes, **caractérisé en ce qu'**un débit volumique de consigne, une vitesse de consigne, un couple moteur de consigne ou un courant de consigne est spécifié(e) comme signal de validation (VS).

6. Dispositif permettant de faire fonctionner un système de freinage (2) d'un véhicule, en particulier d'un véhicule automobile (1), qui présente au moins un actionneur électrique (9) pour générer une force de freinage, en particulier un servofrein (6), ainsi qu'un système de conduite autonome qui est réalisé pour piloter l'actionneur (9) de façon autonome, et au moins une pédale de frein (8) pouvant être actionnée par un conducteur du véhicule, **caractérisé par** un appareil de commande (11) qui, lorsqu'il est utilisé de façon conforme, est spécialement conçu pour exécuter le procédé selon l'une quelconque des revendications 1 à 5.

7. Système de freinage (2) pour un véhicule, en particulier un véhicule automobile (1), comprenant un actionneur électrique (9), en particulier un servofrein (6), qui peut être piloté pour générer une force de freinage, un système de conduite autonome qui est réalisé pour piloter l'actionneur (9), et une pédale de frein (8), **caractérisé par** un dispositif selon la revendication 6.

8. Véhicule comprenant un système de freinage (2) selon la revendication 7.
